# EUROPÄISCHE PATENTSCHRIFT

(11) **EP 3 489 179 B1**
(45) Veröffentlichungstag und Bekanntmachung des Hinweises auf die Patenterteilung: **16.06.2021**
(21) Anmeldenummer: 18000914.4
(22) Anmeldetag: 20.11.2018
(51) Int. Cl.: B65H 23/02, G01N 29/27

(54) **SENSOR ZUM ERFASSEN MINDESTENS EINER KANTE EINER LAUFENDEN WARENBAHN**
SENSOR FOR DETECTING AT LEAST ONE EDGE OF A MOVING WEB
CAPTEUR DE DÉTECTION D'AU MOINS UN BORD D'UNE BANDE DE MATIÈRE CONTINUE

(30) Priorität: 24.11.2017 DE 102017010880
(43) Veröffentlichungstag der Anmeldung: 29.05.2019
(73) Patentinhaber: Texmag GmbH Vertriebsgesellschaft, 8800 Thalwil (CH)
(72) Erfinder: Schwarz, Norbert, 86316 Friedberg (DE)
(74) Vertreter: Witzany, Manfred

(56) Entgegenhaltungen:
- EP-A1- 1 637 877
- US-A- 5 834 877
- US-A1- 2009 152 800
- US-A1- 2013 043 415

## Beschreibung

Die Erfindung betrifft einen Sensor zum Erfassen mindestens einer Kante mindestens einer in einer Laufrichtung laufenden Warenbahn. Dabei weist der Sensor aktive Elemente auf, welche in mindestens einer quer zur Laufrichtung der mindestens einen Warenbahn verlaufenden Erfassungsrichtung nebeneinander angeordnet sind. Die aktiven Elemente sind von Sendern und Empfängern gebildet, wobei die mindestens eine Warenbahn im Strahlungsweg zwischen den Sendern und Empfängern vorgesehen ist. Die Warenbahn kann die Wellen beeinflussen, so dass durch Auswertung der von den Empfängern erzeugten Signale die Lage der mindestens einen Kante der mindestens einen Warenbahn bestimmbar ist. Die mindestens eine Kante muss nicht notwendigerweise eine Außenkante sein. Sie kann auch Bereiche der mindestens einen Warenbahn trennen, die die Wellen unterschiedlich beeinflussen.

Aus der DE 103 37 673 B3 ist ein gattungsgemäßer Sensor bekannt. Dieser weist piezoelektrische aktive Elemente auf, die sowohl als Sender als auch Empfänger dienen. Diese piezoelektrischen Elemente senden Ultraschallwellen ab, die von einer laufenden Warenbahn absorbierbar sind. Ein jenseits der Warenbahn angeordneter Reflektor reflektiert die auf diese Weise beeinflussten Ultraschallwellen zu den piezoelektrischen Elementen zurück, die dann als Empfänger dienen. Die piezoelektrischen Elemente sind rasterförmig angeordnet, so dass alle den gleichen gegenseitigen Abstand aufweisen. Dadurch ergibt sich eine einfache Auswertung der von den piezoelektrischen Elementen empfangenen Signale, um auf diese Weise die Position der Kante der laufenden Warenbahn zu ermitteln. Diese Vorrichtung hat sich in der Praxis vielfach bewährt und bildet den Ausgangspunkt der vorliegenden Erfindung. Dokument US 2013/0043415 offenbart einen Sensor zum Erfassen einer Kante einer laufenden Bahn mit nicht äquidistant angeordneten Elementen.

Der Erfindung liegt die Aufgabe zugrunde, einen Sensor der eingangs genannten Art zu schaffen, der sich durch eine große Detektionsbreite bei gleichzeitig geringem Hardware-Aufwand auszeichnet.

Diese Aufgabe wird mit den folgenden Merkmalen gelöst.

Der erfindungsgemäße Sensor dient zum Erfassen mindestens einer Kante von mindestens einer Warenbahn. Die mindestens eine Warenbahn läuft dabei in einer vorgegebenen Laufrichtung, wobei die mindestens eine Kante in der Regel längs zur Laufrichtung verläuft. Um die mindestens eine laufende Warenbahn korrekt ausgerichtet einer Bearbeitungsstation zuzuführen bzw. die mindestens eine Kante in ihrer Lage zu regeln, ist es wichtig, die Lage der mindestens einen Kante zu erfassen. Unter dem Begriff "Kante" ist hier und im Folgenden nicht notwendigerweise eine Randkante der Warenbahn gemeint. Als Kante ist jedes beliebige Merkmal der mindestens einen Warenbahn zu verstehen, welches sich in der Beeinflussung der Wellen von anderen Bereichen der mindestens einen Warenbahn unterscheidet. Eine Kante in diesem Sinn könnte demnach auch eine aufgebrachte Markierung sein, die die Wellen anders beeinflusst, insbesondere reflektiert. Eine derartige Markierung könnte aufgedruckt, aufgeklebt oder geprägt sein. Diese Aufzählung ist lediglich beispielhaft und nicht abschließend zu verstehen. Wichtig ist lediglich, dass sich im Bereich der Kante ein Kontrast in den Wellen ergibt. Zu diesem Zweck dient der erfindungsgemäße Sensor. Er weist aktive Elemente auf, welche in einer Erfassungsrichtung nebeneinander angeordnet sind. Diese Erfassungsrichtung verläuft im Wesentlichen quer zur Laufrichtung der mindestens einen Warenbahn. Es ist dabei nicht notwendig, dass die Erfassungsrichtung genau senkrecht zur Laufrichtung steht. Wichtig ist lediglich, dass die Erfassungsrichtung nicht parallel zur Laufrichtung verläuft, da in diesem Fall keine vernünftige Kantenposition ermittelbar wäre. Es ist auch nicht erforderlich, dass die aktiven Elemente in der Erfassungsrichtung in einer Linie liegen. Oftmals ist es günstiger, die aktiven Elemente zickzackförmig anzuordnen, um auf diese Weise eine gegenseitige Überlappung der aktiven Elemente in Erfassungsrichtung zu realisieren. Dies ist vor allem in jenen Fällen von Bedeutung, in denen die aktiven Elemente eine beträchtlich geringere Emissions- bzw. Detektionsfläche aufweisen als ihre äußeren geometrischen Abmessungen vorgeben. Dabei entsteht ein messtechnisch betrachtet toter Rand, der durch die zickzackförmige Anordnung ausgleichbar ist. Die aktiven Elemente sind von mindestens einem Sender und mindestens einem Empfänger gebildet, die vom gleichen oder von verschiedenen aktiven Elementen gebildet sind.

Die mindestens eine Warenbahn ist dabei im Strahlungsweg zwischen dem mindestens einen Sender und dem mindestens einen Empfänger vorgesehen. Die mindestens eine Warenahn ist dabei in der Lage, die Wellen zu beeinflussen. Dabei ist es irrelevant, wie diese Beeinflussung tatsächlich im Einzelnen realisiert wird. Beispielsweise könnte mindestens ein Teil der Wellen durch die mindestens eine Warenbahn absorbiert, reflektiert und/oder in ihrer Polarisation beeinflusst werden. Dabei spielt es auch keine Rolle, ob der mindestens eine Empfänger die von der mindestens einen Warenbahn reflektierten Wellen detektiert oder die mindestens eine Warenbahn einen Teil der Wellen abschwächt und die teilweise abgeschwächten Wellen detektiert werden. Die mindestens eine Warenbahn kann geometrisch zwischen dem mindestens einen Sender und dem mindestens einen Empfänger vorgesehen sein. Alternativ können auch beide auf der gleichen Seite der Warenbahn vorgesehen sein, so dass die mindestens eine Warenbahn die Wellen reflektiert oder die Wellen von einem zusätzlichen Reflektor auf der der mindestens einen Warenbahn gegenüberliegenden Seite reflektiert werden. Auch die Wahl der Wellen ist grundsätzlich irrelevant. Ein erstes und ein zweites der aktiven Elemente sind in Erfassungsrichtung benachbart angeordnet und weisen einen ersten gegenseitigen Abstand auf. Unter dem Begriff "erstes", "zweites", "drittes" und "viertes" sind hier und im Folgenden nicht notwendigerweise das erste, zweite, dritte und vierte aktive Element in einer Reihe von aktiven Elementen gemeint. Diese Begriffe dienen lediglich zur Unterscheidung von einzelnen aktiven Elementen aus einer Reihe von aktiven Elementen. Unter dem Begriff "benachbart" ist hier und im Folgenden zu verstehen, dass zwischen zwei benachbarten aktiven Elementen in Erfassungsrichtung kein weiteres gleichartiges aktives Element vorgesehen ist. Als "Abstand" zweier Elemente oder Gruppen wird hier und im Folgenden die Projektion des Abstandes der Zentren der beiden Elemente oder Gruppen in Erfassungsrichtung verstanden (Mittenabstand). Grundsätzlich könnte dieser Abstand - wie im Stand der Technik üblich - für alle aktiven Elemente gleich sein. Um aber eine große Detektionsbreite zu erzielen, müssten dann sehr viele aktive Elemente vorgesehen werden. Dies erfordert nicht nur viele aktive Elemente, sondern auch bei der Auswertung der von den Empfängern gelieferten Signale einen großen Wandlungs- und Rechenaufwand. Dies würde aber wiederum die Reaktionszeit des Sensors auf Lageänderungen der mindestens einen Kante verlängern, was insbesondere im Zusammenhang mit Bahnlaufregelungen zu möglicherweise nicht lösbaren Problemen führt. Mehr Analog-Digital-Wandler zur Verfügung zu stellen, führt jedoch zu einem unerwünscht hohen Hardwarebedarf. Zur Lösung dieser Probleme wird vorgeschlagen, unterschiedliche Abstände zwischen den einzelnen aktiven Elementen vorzusehen. Insbesondere soll ein zweiter Abstand zwischen dem zweiten und einem dritten der aktiven Elemente, welche wiederum benachbart sind, mindestens dem 1,2-fachen des ersten Abstandes entsprechen. Aufgrund des größeren zweiten Abstandes der aktiven Elemente ergibt sich zwangsläufig eine größere Erfassungsbreite des gesamten Sensors, ohne mehr aktive Elemente zu erfordern. Zur weiteren Vergrößerung der Erfassungsbreite kann der zweite Abstand auch mindestens dem 1,3-, 1,4-, 1,5-, 1,6-, 1,7-, 1,8-, 1,9- 2,0-, 2,1-, 2,2-, 2,3-, 2,4-, 2,5-, 2,6-, 2,7-, 2,8-, 2,9-, oder 3-fachen des ersten Abstands entsprechen. Es hat sich herausgestellt, dass diese Maßnahme trotzdem die Auflösung des Sensors insgesamt nicht negativ beeinflusst. Man muss lediglich sicherstellen, dass die aktiven Elemente nicht nur im Bereich der Position der mindestens einen Kante, sondern weitere aktive Elemente in der Umgebung der Kante berücksichtigt werden. Dies führt zu keinem höheren Rechenaufwand, da ohnehin zunächst alle aktiven Elemente ausgewertet werden müssen, um die Lage der Kante zu bestimmen. Vorzugsweise werden dabei auch einander in Erfassungsrichtung kreuzende Strahlungswege berücksichtigt. Hierzu muss lediglich sichergestellt werden, dass der kleinere erste Abstand nicht zu groß gewählt wird. Dies hängt aber von verschiedenen Faktoren, insbesondere der Breite der aktiven Elemente ab. Damit kann eine Detektionslücke zwischen den aktiven Elementen durch Wege zu nicht gegenüberliegenden aktiven Elementen abgedeckt werden. Es hat sich herausgestellt, dass auf diese Weise die Anzahl der aktiven Elemente erheblich reduziert werden kann. Insbesondere kann der zweite Abstand zwischen dem zweiten und dem dritten Element bis zum 2-fachen des ersten Abstandes erhöht werden, ohne Auflösungsverluste in Form von Detektionslücken in Kauf nehmen zu müssen. Damit ergibt sich ein kostengünstiger Aufbau mit wenig aktiven Elementen bei hoher Detektionsbreite und geringem Rechenaufwand. Zur weiteren Erhöhung der Detektionsbreite des Sensors ist es vorteilhaft, wenn dem dritten aktiven Element ein viertes benachbart ist, wobei ein gegenseitiger dritter Abstand zwischen dem dritten und dem vierten aktiven Element in Erfassungsrichtung höchstens dem 1,1-fachen, vorzugsweise höchstens dem 1,05-fachen des ersten Abstandes entspricht. Auf diese Weise wird erreicht, dass beidseits einer größeren Lücke zwischen den aktiven Elementen jeweils nahe beieinander liegende aktive Elemente liegen. Die nahe beieinander liegenden aktiven Elemente, nämlich das erste und zweite sowie das dritte und vierte aktive Element sehen die mindestens eine Warenbahn aus geringfügig unterschiedlichen Betrachtungswinkeln, so dass auf diese Weise sehr effektiv die Lücke zwischen dem zweiten und dem dritten aktiven Element überbrückt werden kann.

Das erste und zweite sowie das dritte und vierte der aktiven Elemente bilden jeweils eine Gruppe, deren Abstand in Erfassungsrichtung mindestens dem 2,2-fachen des ersten Abstandes entspricht. Vorzugsweise entspricht der Abstand der Gruppen mindestens dem 2,3-, 2,4-, 2,5-, 2,6-, 2,7-, 2,8-, 2,9- oder 3-fachen des ersten Abstandes. Dabei ist es nicht notwendig, die Gruppen jeweils geometrisch gleich aufzubauen. Es reicht vielmehr aus, die Gruppen innerhalb der oben beschriebenen Grenzen der aktiven Elemente zu realisieren. Als "Abstand zwischen beiden Gruppen" ist derjenige Abstand zu verstehen, der in Erfassungsrichtung zwischen den Zentren beider Gruppen besteht.

Beliebige Gruppen können wiederum zu Gruppen höherer Ordnung zusammengefasst werden. Zur Erhöhung der Detektionsbreite des Sensors ist dabei vorgesehen, dass der gegenseitige Abstand zwischen diesen Gruppen höherer Ordnung mindestens dem 2,2-fachen des Abstandes der Gruppen der jeweils niedrigeren Ordnung entspricht. Vorzugsweise entspricht der Abstand dieser Gruppen mindestens dem 2;3-, 2,4-, 2,5-, 2,6-, 2,7-, 2,8-, 2,9- oder 3-fachen des Abstandes der Gruppen der jeweils niedrigeren Ordnung.

Die oben genannte Bedingung zur Anordnung von Gruppen aus Gruppen kann iterativ angewendet werden, indem Gruppen zu Gruppen höherer Ordnung zusammengefasst werden, die wiederum einen entsprechend größeren gegenseitigen Abstand aufweisen. Dabei ist der Mindestabstand zwischen den Gruppen höherer Ordnung stets mindestens 2,2-fach größer als der Abstand der Gruppen der darunterliegenden Ordnung. Vorzugsweise entspricht der Abstand dieser Gruppen mindestens dem 2,3-, 2,4-, 2,5-, 2,6-, 2,7-, 2,8-, 2,9- oder 3-fachen des Abstandes der Gruppen der darunterliegenden Ordnung.

Um die mindestens eine Warenbahn in Erfassungsrichtung lückenlos zu erfassen, ist der erste Abstand zwischen dem ersten und dem zweiten aktiven Element höchstens gleich dem Doppelten des Mittelwerts der Breiten des ersten und zweiten aktiven Elements. Dabei kann der mindestens eine Sender über eine in Erfassungsrichtung gerichtete Breite Wellen abgeben, welche der mindestens eine Empfänger über eine in Erfassungsrichtung gerichtete Breite empfangen kann. Unter dem Begriff der "Breite" im Zusammenhang mit den aktiven Elementen ist jene Breite zu verstehen, innerhalb der der entsprechende Sender bzw. Empfänger messtechnisch relevant Wellen aussenden bzw. empfangen kann. Kann ein Sender bzw. Empfänger im äußersten Randbereich nur noch sehr geringe Wellenleistungen pro Raumwinkel abstrahlen bzw. die empfangenen Wellen nur noch in ein sehr geringes Messsignal umwandeln, so dass sich ein ungünstiges bzw. nicht mehr akzeptables Signal-zu-Rausch-Verhältnis ergibt, so wird dieser Bereich nicht zur "Breite" gezählt.

Grundsätzlich können die aktiven Elemente unterschiedliche Breiten aufweisen. Dies führt jedoch zu einer komplexeren Auswertung der Signale. Aus diesem Grund ist es vorteilhaft, wenn die Sender und/oder Empfänger jeweils gleiche Breiten aufweisen.

In einer besonders vorteilhaften Ausgestaltung des Erfindungsgegenstandes sind die Breiten aller aktiven Elemente gleich.

Grundsätzlich könnten nur ein Sender und mehrere Empfänger oder nur ein Empfänger und mehrere Sender vorgesehen sein. In einer vorteilhaften Ausgestaltung liegt jedoch jedem Sender genau ein Empfänger gegenüber. Auf diese Weise ergibt sich eine optimale Winkelauflösung, so dass relativ große Lücken zwischen bestimmten aktiven Elementen gelassen werden können. Dies vergrößert die Detektionsbreite des Sensors.

Zur weiteren Vereinfachung der Auswertung der von den Empfängern erhaltenen Signale ist es vorteilhaft, wenn wenigstens ein Teil der aktiven Elemente - in Erfassungsrichtung gesehen - rasterartig angeordnet ist. Damit besitzt jedes der aktiven Elemente eine Position, die sich als ganzzahliges Vielfaches einer Rasterlänge berechnen lässt. Unter Berücksichtigung der oben beschriebenen Eigenschaften des Sensors ist es verständlich, dass bei der rasterartigen Anordnung nicht jeder ganzen Zahl innerhalb eines Intervalls auch tatsächlich ein aktives Element zugeordnet werden kann. Es bleiben vielmehr verschiedene mögliche Rasterpunkte leer.

Um eine maximale Detektionsbreite des Sensors zu erreichen, ist es zweckmäßig, wenn wenigstens ein Teil der aktiven Elemente eine Anordnung entsprechend einer abgebrochenen Cantor-Menge aufweist. Eine Cantor-Menge kann in folgender Weise konstruiert werden:
Man startet mit einem abgeschlossenen Intervall, beispielsweise [0,1]. Aus diesem Intervall wird das offene, mittlere Drittel oder weniger entfernt, so dass nun zwei Intervalle der Form [0,1/3] und [2/3,1] oder mehr übrig bleiben. Dieser Vorgang ist grundsätzlich unendlich oft zu wiederholen, so dass die Cantor-Menge unendlich viele isolierte Punkte aufweist. Bei einer abgebrochenen Cantor-Menge ist dagegen der oben beschriebene Iterationsprozess nur über eine endliche Anzahl von Stufen durchzuführen, so dass am Ende eine endliche Anzahl von Intervallen übrig bleibt. Im Zentrum jedes dieser Intervalle befindet sich dann eines der aktiven Elemente, um eine Anordnung entsprechend einer abgebrochenen Cantor-Menge zu realisieren.

Für die Wellen haben sich elektromagnetische Wellen bewährt. Dabei ist die Frequenz frei wählbar. Vorzugsweise werden Radiowellen oder Wellen im optischen bzw. infraroten Bereich eingesetzt. Dies ist jedoch nicht einschränkend zu verstehen.

Alternativ können auch Schallwellen eingesetzt werden, insbesondere wenn sich die mindestens eine laufende Warenbahn optisch nicht sinnvoll abtasten lässt, weil diese beispielsweise die Wellen in keiner Weise beeinflussen würde.

Insbesondere bei Schallwellen ist es vorteilhaft, wenn mindestens eines der aktiven Elemente Sender und Empfänger ist. Vorzugsweise ist in diesem Fall das mindestens eine aktive Element in Form eines Piezo-Kristalls ausgebildet, der Schallwellen aussenden und aufgrund des zwangsläufig vorhandenen Resonanzeffekts optimal detektieren kann. Da sich Schallwellen im Verhältnis zu elektromagnetischen Wellen relativ langsam ausbreiten, kann jegliche Störung vom Senden der Wellen durch Totzeit-Ausblendung eliminiert werden.

Grundsätzlich ist der Sensor dazu gedacht, mindestens eine Kante in Erfassungsrichtung zu erfassen, um auf diese Weise die Lage der mindestens einen Kante zu bestimmen. Alternativ oder zusätzlich kann jedoch auch eine Lagebestimmung quer zur Erfassungsrichtung erfolgen, um auf diese Weise die Lage der mindestens einen Warenbahn senkrecht zur Warenbahnebene zu ermitteln. Dieser Wert ist insbesondere als Korrekturterm für die Kantenlage von Bedeutung.

Der Erfindungsgegenstand wird beispielhaft anhand der Zeichnung erläutert, ohne den Schutzumfang zu beschränken.

Es zeigt:
- Figur 1: eine räumliche Prinzipdarstellung einer ersten Ausführungsform des Erfindungsgegenstandes,
- Figur 2: eine räumliche Prinzipdarstellung einer zweiten Ausführungsform des Erfindungsgegenstandes,
- Figur 3: eine räumliche Prinzipdarstellung einer dritten Ausführungsform des Erfindungsgegenstandes,
- Figur 4: eine Ansicht des Erfindungsgegenstandes gemäß Figur 1 in Richtung der Erfassungsrichtung und
- Figur 5: ein Diagramm.

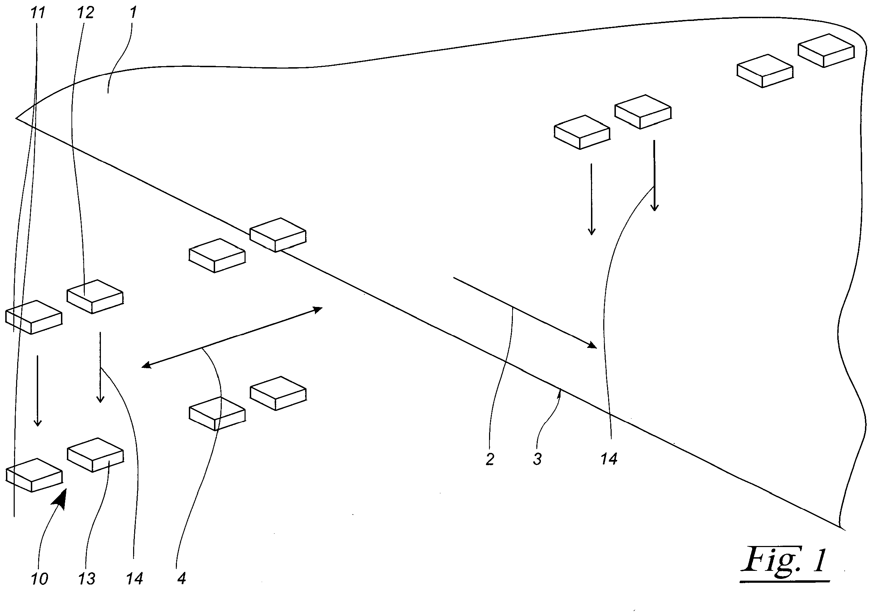

Die Figur 1 zeigt eine räumliche Prinzipdarstellung einer ersten Ausführungsform des Erfindungsgegenstandes. Eine Warenbahn 1 bewegt sich entlang einer Laufrichtung 2 und weist eine Kante 3 auf. Die Lage der Kante 3 in einer senkrecht zur Laufrichtung 2 sich erstreckenden Erfassungsrichtung 4 wird durch einen Sensor 10 erfasst.

Der Sensor 10 weist eine Vielzahl von aktiven Elementen 11 auf, von denen einige als Sender 12 und andere als Empfänger 13 ausgebildet sind. Die Sender 12 können Wellen 14, insbesondere in Form von Licht emittieren, während die Empfänger 13 diese Wellen 14 empfangen und in ein elektrisches Signal umwandeln können. Befindet sich die Warenbahn 1 zwischen einem Sender 12 und einem Empfänger 13, so werden die Wellen 14 durch die Warenbahn 1 abgeschattet, wodurch grob die Lage der Kante 3 der Warenbahn 1 ermittelt werden kann. Zusätzlich wird das vom Empfänger 13 erzeugte elektrische Signal auch in seiner Signalhöhe analog ausgewertet. Dabei ist zu berücksichtigen, dass das detektierte Signal umso kleiner wird, je mehr die Warenbahn 1 den Strahlungsweg zwischen dem Sender 12 und dem Empfänger 13 verdeckt. Auf diese Weise kann der Sensor 10 die Lage der Kante 3 der Warenbahn 1 mit hoher räumlicher Auflösung erfassen, die insbesondere wesentlich genauer ist als die von den einzelnen aktiven Elementen 11 definierten Punkte.

Der Sensor 10 wertet dabei nicht nur die unmittelbaren Strahlungswege von einem Sender 12 zum gegenüberliegenden Empfänger 13 aus, es werden vielmehr auch Strahlungswege zu verschiedenen Empfängern 13 berücksichtigt.

Bei der Anordnung gemäß Figur 1 befinden sich alle Sender 12 auf einer Seite der Warenbahn 1 und alle Empfänger 13 auf der gegenüberliegenden Seite. Es ergibt sich daher die bekannte Gabelanordnung. Diese ist jedoch nicht die einzige mögliche Anordnung.

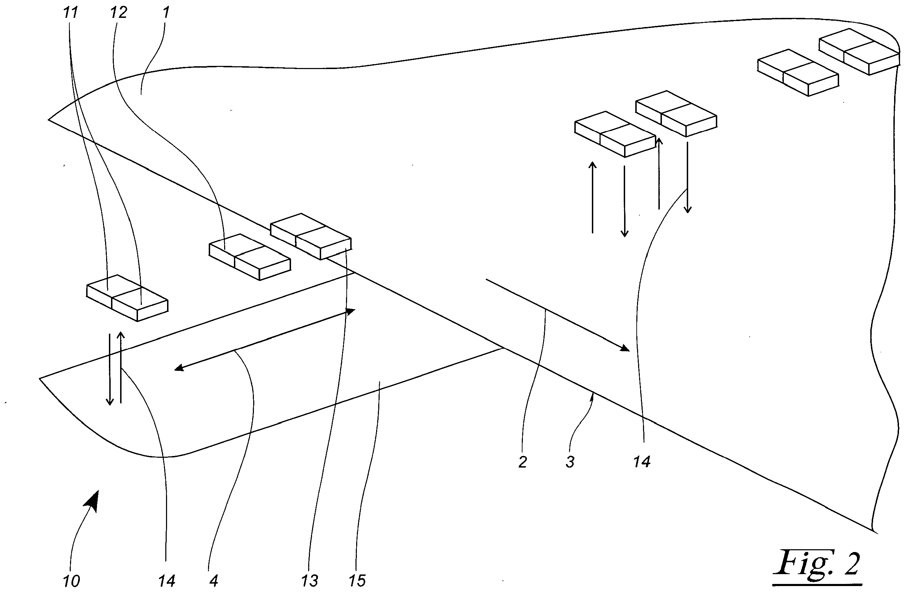

Die Figur 2 zeigt eine alternative Ausführungsform, wobei gleiche Bezugszeichen gleiche Teile benennen. Im Folgenden wird lediglich auf die Unterschiede zur Ausführungsform gemäß Figur 1 eingegangen. Bei der Ausführungsform gemäß Figur 2 befinden sich die Sender 12 und Empfänger 13 auf der gleichen Seite der Warenbahn 1. In diesem Fall detektieren die Empfänger 13 die von der Warenbahn 1 reflektierten Wellen 14. Auch hierbei ergeben sich die gleichen Effekte wie bei der Ausführungsform gemäß Figur 1. Wesentlicher Unterschied ist nur, dass nun jeder Empfänger 13 genau dann ein entsprechendes elektrisches Signal erzeugt, wenn die Warenbahn 1 im Strahlungsweg zwischen dem Sender 12 und dem Empfänger 13 liegt.

In der Ausführungsform gemäß Figur 2 ist noch ein optionaler Reflektor 15 gezeigt, der insbesondere bei nicht oder nur schlecht reflektierenden Warenbahnen 1 eingesetzt wird. Dieser Reflektor 15 sorgt für eine Reflexion der Wellen 14, sofern der Strahlungsweg nicht von der Warenbahn 1 verdeckt wird.

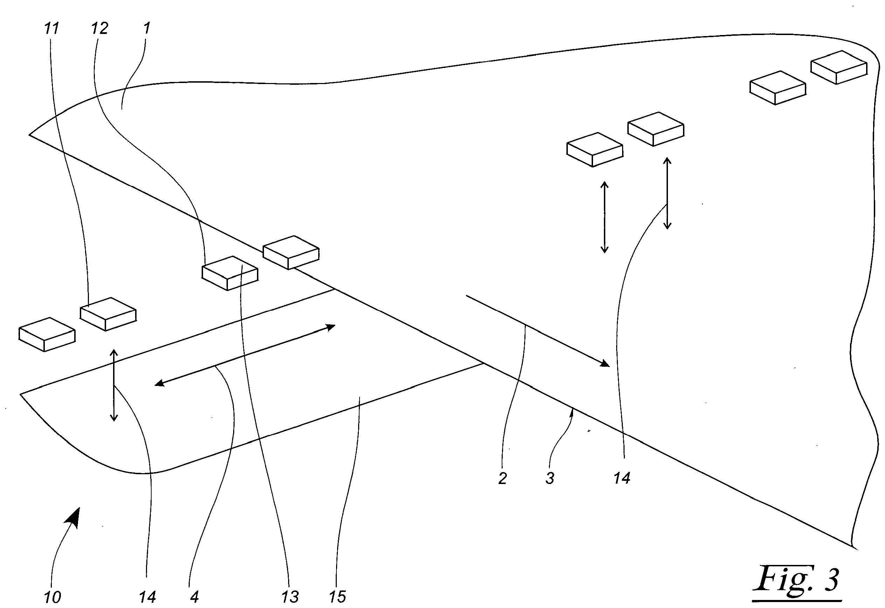

Die Figur 3 zeigt eine weitere alternative Ausführungsform gemäß Figur 2, wobei wiederum gleiche Bezugszeichen gleiche Teile benennen. Im Folgenden wird wiederum nur auf die Unterschiede zur Ausführungsform gemäß Figur 2 eingegangen.

Bei der Ausführungsform gemäß Figur 3 besitzt jedes aktive Element 11 eine Doppelfunktion und ist Sender 12 und Empfänger 13 gleichzeitig. Diese Maßnahme ist insbesondere dann vorteilhaft, wenn die Wellen 14 Ultraschallwellen sind.

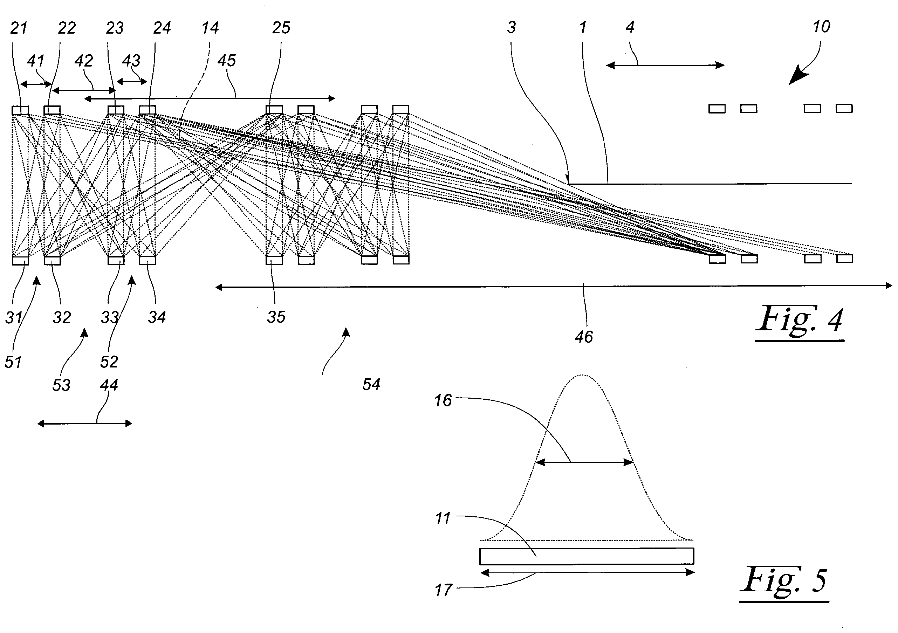

Die nähere Erläuterung der Funktionsweise des Sensors 10 erfolgt anhand der Darstellung gemäß Figur 4. Diese Darstellung entspricht einer Ansicht des Sensors 10 gemäß Figur 1 in Richtung der Laufrichtung 2, so dass die Erfassungsrichtung 4 in der Figur 4 eine horizontale Linie in der Zeichenebene ist. Zur Unterscheidung der einzelnen aktiven Elemente 11 werden diese im Folgenden nummeriert. Dabei steht "erstes" nicht notwendigerweise für das erste aktive Element 11 in der Reihe von aktiven Elementen 11 . Die Zuordnung ist vielmehr beliebig. Die Nummerierung der aktiven Elemente 11 erfolgt jedoch derart, dass benachbarte aktive Elemente 11 auch benachbarte Ordinalzahlen erhalten. Die oberen aktiven Elemente 11 sind dabei stets die Sender 12, während die unteren aktiven Elemente 11 die Empfänger 13 sind.

Betrachtet man nun einen ersten Sender 21, so sieht man, dass eine feinfühlige Auswertung der Kantenposition der Warenbahn 1 grundsätzlich nur in einem Bereich möglich ist, der innerhalb der Breiten 16 zwischen dem ersten Sender 21 und einem ersten Empfänger 31 liegt. Nachdem ein zweiter Sender 22 in einem ersten Abstand 41 zum ersten Sender 21 angebracht ist, welcher höchstens gleich dem doppelten des Mittelwerts der Breiten 16 entspricht, ergibt sich zwischen dem ersten Sender 21 und dem zweiten Sender 22 eine Lücke, die weder vom ersten Sender 21 und ersten Empfänger 31 noch vom zweiten Sender 22 und zweiten Empfänger 32 messtechnisch erfassbar ist. Diese Lücke wird dadurch geschlossen, dass der erste Sender 21 auch vom zweiten Empfänger 32 ausgewertet wird. Alternativ oder zusätzlich kann auch der zweite Sender 22 vom ersten Empfänger 31 ausgewertet werden. Man sieht, dass durch diese Maßnahme die vorbeschriebene Lücke im Erfassungsbereich geschlossen wird. Dies funktioniert allerdings nur, wenn der erste Abstand 41 nicht größer als der doppelte Mittelwert der Breiten 16 der genannten Elemente 11 ist.

Der erste und zweite Sender 21, 22 und der erste und zweite Empfänger 31, 32 werden im Folgenden als Gruppe 51 aufgefasst. Eine im Wesentlichen gleich aufgebaute Gruppe 52 besteht aus einem dritten Sender 23 und einem vierten Sender 24, sowie einem dritten Empfänger 33 und vierten Empfänger 34, welche in einem gegenseitigen dritten Abstand 43 angeordnet sind, der im Wesentlichen dem ersten Abstand 41 entspricht. Der zweite und dritte Sender 22, 23 sind jedoch in einem wesentlich größeren zweiten Abstand 42 voneinander angeordnet. Dadurch ergibt sich zwischen beiden Gruppen 51, 52 eine entsprechend vergrößerte Lücke, die von den aktiven Elementen 11 nicht unmittelbar erfassbar ist.

Man erkennt jedoch, dass diese Lücke durch wechselseitiges Auswerten der einzelnen Sender 12 und Empfänger 13 geschlossen werden kann. Der an den zweiten Sender 22 anschließende Lückenbereich wird beispielsweise durch Auswerten des ersten Empfängers 31 bei eingeschaltetem dritten Sender 23 abgedeckt. Alternativ oder zusätzlich könnte auch der erste Sender 21 zusammen mit dem dritten Empfänger 33 genutzt werden. Der nächste Lückenbereich wird von der Paarung dritter Sender 23 und zweiter Empfänger 32 abgedeckt. Alternativ oder zusätzlich kann hier wiederum der zweite Sender 22 und der dritte Empfänger 33 genutzt werden. Der letzte Bereich der Lücke wird schließlich vom zweiten Sender 22 und dem vierten Empfänger 34 abgedeckt. Alternativ kann hier wiederum der vierte Sender 24 und der zweite Empfänger 32 genutzt werden. Auf diese Weise ist die gesamte Lücke zwischen den beiden Gruppen 51, 52 abgedeckt, sofern der zweite Abstand 42 nicht größer als das 2-fache des ersten Abstandes 41 ist. Die Lücke zwischen dem dritten Sender 23 und dem vierten Sender 24 wird in gleicher Weise wie zwischen dem ersten Sender 21 und dem zweiten Sender 22 abgedeckt.

Die Gruppen 51, 52 bilden wiederum eine Gruppe 53, der eine weitere Gruppe 54 folgt. In dieser Gruppe 54 ist ein fünfter Sender 25 und ein fünfter Empfänger 35 vorgesehen, wobei die Gruppen 53, 54 einen fünften Abstand 45 haben, der insbesondere dem 9-fachen des ersten Abstandes 41 entspricht. Diesem fünften Sender 25 schließen sich weitere aktive Elemente 11 in gleicher Weise wie die bislang beschriebene Anordnung an. Auch die Lücke im fünften Abstand 45 wird in entsprechender Weise durch wechselseitiges Nutzen von Sendern 12 und Empfängern 13 abgedeckt.

Grundsätzlich kann diese Anordnung in beliebiger Weise erweitert werden, so dass die nach dem obigen Konstruktionsprinzip definierten Gruppen stets paarweise nebeneinander gesetzt werden und der Abstand zwischen diesen Gruppen mit jeder Gruppenordnung mindestens um den Faktor 2,2, höchstens um den Faktor 4,0, insbesondere um den Faktor 3,0 vergrößert wird. Damit ergibt sich eine Cantor-Anordnung, die den Grenzwert für eine lückenlose Auswertbarkeit des gesamten Messbereichs darstellt. Dies ist in der Figur 4 angedeutet, indem rechts neben der beschriebenen Anordnung noch eine weitere Gruppe folgt, die in einen sechsten Abstand 46 vorgesehen ist. Diese Cantor-Anordnung kann jedoch nicht beliebig fortgesetzt werden, da die Sender 12 in der Regel nur in einem beschränkten Winkelbereich abstrahlen können und die Empfänger 13 auch nur aus einem beschränkten Winkelbereich Wellen empfangen können. Damit kann keine mathematisch exakte Cantor-Anordnung realisiert werden. Man muss das Konstruktionsprinzip - wie oben beschrieben - an einem bestimmten Punkt abbrechen. Reicht dies für die gewünschte Detektionsbreite nicht aus, so müssen mehrere dieser abgebrochenen Cantor-Anordnungen nebeneinander gesetzt werden, ohne den gegenseitigen Abstand weiter zu erhöhen.

Wie man den obigen Ausführungen entnehmen kann, ergibt sich durch diese Anordnung eine erhebliche Reduktion von aktiven Elementen 11, so dass entweder weniger aktive Elemente 11 verbaut werden müssen oder die vorhandenen aktiven Elemente 11 über einen größeren Erfassungsbereich verteilt werden können. In der Ebene der Warenbahn 1 ergeben sich durch die neue Anordnung der aktiven Elemente 11 keine Lücken im Erfassungsbereich. Derartige Lücken entstehen nur in der Nähe der Ebene der aktiven Elemente 11, was aber für die Lagerfassung der Warenbahn 1 keine Rolle spielt.

Die Sender 12 besitzen Breiten 16, über die sie Wellen 14 mit relevanter Leistung abgeben können. Die Empfänger 13 können über die Breite 16 die Wellen 14 in ein messtechnisch relevantes elektrisches Signal umwandeln. Dieser Sachverhalt ist im unten dargestellten Diagramm gemäß Figur 5 dargestellt. Dieses Diagramm zeigt die Abstrahlcharakteristik des Senders 12 als Funktion des Ortes im Sender 12. Der Sender 12 besitzt dabei eine Bauelementbreite 17. Man erkennt an der Abstrahlcharakteristik jedoch, dass der Sender 12 in den Randbereichen keine messtechnisch relevante Abstrahlintensität mehr besitzt, weil sich in den Randbereichen ein inakzeptables Signal-zu-Rausch-Verhältnis ergibt. In diesem Fall wird die Breite 16 des Senders 12 von den Flanken der Abstrahlcharakteristik bestimmt. Wie die Breite 16 konkret definiert wird, spielt für den Erfindungsgegenstand nur eine untergeordnete Rolle. Beispielsweise könnte der Wendepunkt der Abstrahlcharakteristik als Grenze für die Breite 16 genutzt werden. Alternativ könnte auch beispielsweise ein bestimmtes Verhältnis zwischen der lokalen Abstrahlcharakteristik und der Abstrahlcharakteristik im Peak genutzt werden, beispielsweise der Halbierungspunkt oder der 1/e-Punkt der Abstrahlcharakteristik. Dieselbe Überlegung wird auch für den Empfänger 13 angestellt, wobei dort anstatt der Abstrahlcharakteristik das Verhältnis zwischen dem vom Empfänger 13 erzeugten elektrischen Signal und der eingestrahlten Wellenleistung genutzt wird. Sind die aktiven Elemente 11 mit die Wellen 14 beeinflussenden Mitteln, wie beispielsweise Linsen, Diffusoren oder Beugungsspalten ausgerüstet, so sind diese Mittel bei der Breitenbestimmung zu berücksichtigen.

**Bezugszeichenliste**

| | | | |
|---|---|---|---|
| 1 | Warenbahn | 53 | Gruppe |
| 2 | Laufrichtung | 54 | Gruppe |
| 3 | Kante | | |
| 4 | Erfassungsrichtung | | |
| 10 | Sensor | | |
| 11 | aktives Element | | |
| 12 | Sender | | |
| 13 | Empfänger | | |
| 14 | Wellen | | |
| 15 | Reflektor | | |
| 16 | Breite | | |
| 17 | Bauelementbreite | | |
| 21 | erster Sender | | |
| 22 | zweiter Sender | | |
| 23 | dritter Sender | | |
| 24 | vierter Sender | | |
| 25 | fünfter Sender | | |
| 31 | erster Empfänger | | |
| 32 | zweiter Empfänger | | |
| 33 | dritter Empfänger | | |
| 34 | vierter Empfänger | | |
| 35 | fünfter Empfänger | | |
| 41 | erster Abstand | | |
| 42 | zweiter Abstand | | |
| 43 | dritter Abstand | | |
| 44 | vierter Abstand | | |
| 45 | fünfter Abstand | | |
| 46 | sechster Abstand | | |
| 51 | Gruppe | | |
| 52 | Gruppe | | |

## Patentansprüche

1. Sensor zum Erfassen mindestens einer Kante (3) mindestens einer in einer Laufrichtung (2) laufenden Warenbahn (1), wobei der Sensor (10) aktive Elemente (11) aufweist, welche in mindestens einer quer zur Laufrichtung (2) der mindestens einen Warenbahn (1) verlaufenden Erfassungsrichtung (4) nebeneinander angeordnet sind, und die aktiven Elemente (11) von Sendern (12) und Empfängern (13) gebildet sind, wobei die Sender (12) Wellen (14) abgeben und die Empfänger (13) die Wellen (14) empfangen können, und die Warenbahn (1) zur Beeinflussung der Wellen (14) im Strahlungsweg zwischen den Sendern (12) und Empfängern (13) vorgesehen ist, wobei ein erstes (21, 31) und ein zweites (22, 32) der aktiven Elemente (11) in Erfassungsrichtung (4) benachbart sind und in Erfassungsrichtung (4) einen ersten gegenseitigen Abstand (41) haben, **dadurch gekennzeichnet, dass** das zweite (22, 32) und ein drittes (23, 33) der aktiven Elemente (11) in Erfassungsrichtung (4) benachbart sind und in Erfassungsrichtung (4) einen zweiten gegenseitigen Abstand (42) haben, der mindestens dem 1,2-fachen des ersten Abstandes (41) entspricht und das dritte (23, 33) und ein viertes (24, 34) der aktiven Elemente (11) in Erfassungsrichtung (4) benachbart angeordnet sind, wobei ein gegenseitige dritter Abstand zwischen dem dritten (23, 33) und vierten (24, 34) der aktiven Elemente (11) in Erfassungsrichtung (4) höchstens dem 1,1-fachen des ersten Abstandes (41) entspricht.

2. Sensor nach Anspruch 1, **dadurch gekennzeichnet, dass** das erste (21, 31) und zweite (22, 32) der aktiven Elemente (11) eine Gruppe (51) bilden, und das dritte (23, 33) und vierte (24, 34) der aktiven Elemente (11) eine Gruppe (52) bilden, wobei die Gruppen (51, 52) einen gegenseitigen vierten Abstand (44) aufweisen, der mindestens das 2,2-fache des ersten Abstands (41) beträgt.

3. Sensor nach Anspruch 2, **dadurch gekennzeichnet, dass** Gruppen (53, 54) höherer Ordnung von Gruppen (51, 52) einen gegenseitigen fünften Abstand (45) aufweisen, der mindestens dem 2,2-fachen des Abstandes der Gruppen (51, 52) entspricht.

4. Sensor nach Anspruch 3, **dadurch gekennzeichnet, dass** der Anspruch 4 iterativ anwendbar ist, indem Gruppen (53, 54) zu Gruppen höherer Ordnung zusammengesetzt sind, die wiederum einen gegenseitigen Abstand aufweisen, der mindestens dem 2,2-fachen des Abstandes der Gruppen (53, 54) der darunterliegenden Ordnung entspricht.

5. Sensor nach mindestens einem der Ansprüche 1 bis 4, **dadurch gekennzeichnet, dass** mindestens eines der aktiven Elemente (11) eine Breite (16) aufweist, die mindestens der Hälfte des ersten Abstandes (41) entspricht.

6. Sensor nach mindestens einem der Ansprüche 1 bis 5, **dadurch gekennzeichnet, dass** die Breiten (16) der Sender (12) gleich sind.

7. Sensor nach mindestens einem der Ansprüche 1 bis 6, **dadurch gekennzeichnet, dass** die Breiten (16) der Empfänger (13) gleich sind.

8. Sensor nach mindestens einem der Ansprüche 1 bis 7, **dadurch gekennzeichnet, dass** die Breiten (16) der aktiven Elemente (11) gleich sind.

9. Sensor nach mindestens einem der Ansprüche 1 bis 8, **dadurch gekennzeichnet, dass** die Sender (12) und Empfänger (13) jeweils gegenüberliegen.

10. Sensor nach mindestens einem der Ansprüche 1 bis 9, **dadurch gekennzeichnet, dass** wenigstens ein Teil der aktiven Elemente (11), in Erfassungsrichtung (4) gesehen, rasterartig angeordnet sind.

11. Sensor nach mindestens einem der Ansprüche 1 bis 10, **dadurch gekennzeichnet, dass** wenigstens ein Teil der aktiven Elemente (11) eine Anordnung entsprechend einer abgebrochenen Cantor-Menge aufweist.

12. Sensor nach mindestens einem der Ansprüche 1 bis 11, **dadurch gekennzeichnet, dass** die Wellen (14) elektromagnetische Wellen sind.

13. Sensor nach mindestens einem der Ansprüche 1 bis 12, **dadurch gekennzeichnet, dass** die Wellen (14) Schallwellen sind.

14. Sensor nach mindestens einem der Ansprüche 1 bis 13, **dadurch gekennzeichnet, dass** mindestens eines der aktiven Elemente (11) Sender (12) und Empfänger (13) ist.

15. Sensor nach mindestens einem der Ansprüche 1 bis 14, **dadurch gekennzeichnet, dass** der Sensor (10) die mindestens eine Kante (3) in Erfassungsrichtung (4) und/oder quer dazu erfassen kann.

## Claims

1. Sensor for detecting at least one edge (3) of at least one product web (1) running in a run direction (2), wherein the sensor (10) has active elements (11), which are arranged adjacent to one another in at least one detection direction (4) extending transversely to the run direction (2) of the at least one product web (1), and the active elements (11) are formed by transmitters (12) and receivers (13), wherein the transmitters (12) can emit waves (14) and the receivers (13) can receive the waves (14), and the product web (1) is provided for influencing the waves (14) in the radiation path between the transmitters (12) and receivers (13), wherein a first (21, 31) and a second (22, 32) of the active elements (11) are adjacent in the detection direction (4) and have a first mutual spacing (41) in the detection direction (4), **characterized in that** the second (22, 32) and a third (23, 33) of the active elements (11) are adjacent in the detection direction (4) and have a second mutual spacing (42) in the detection direction (4), which corresponds to at least 1.2 times the first spacing (41), and the third (23, 33) and a fourth (24, 34) of the active elements (11) are arranged adjacent in the detection direction (4), wherein a mutual third spacing between the third (23, 33) and fourth (24, 34) of the active elements (11) in the detection direction (4) corresponds to at most 1.1 times the first spacing (41).

2. Sensor according to Claim 1, **characterized in that** the first (21, 31) and second (22, 32) of the active elements (11) form a group (51), and the third (23, 33) and fourth (24, 34) of the active elements (11) form a group (52), wherein the groups (51, 52) have a mutual fourth spacing (44), which is at least 2.2 times the first spacing (41).

3. Sensor according to Claim 2, **characterized in that** higher-order groups (53, 54) of groups (51, 52) have a mutual fifth spacing (45), which corresponds to at least 2.2 times the spacing of the groups (51, 52).

4. Sensor according to Claim 3, **characterized in that** Claim 4 is iteratively applicable, by groups (53, 54) being assembled into higher-order groups, which in turn have a mutual spacing which corresponds to at least 2.2 times the spacing of the groups (53, 54) of the order underneath.

5. Sensor according to at least one of Claims 1 to 4, **characterized in that** at least one of the active elements (11) has a width (16), which corresponds to at least half of the first spacing (41).

6. Sensor according to at least one of Claims 1 to 5, **characterized in that** the widths (16) of the transmitters (12) are equal.

7. Sensor according to at least one of Claims 1 to 6, **characterized in that** the widths (16) of the receivers (13) are equal.

8. Sensor according to at least one of Claims 1 to 7, **characterized in that** the widths (16) of the active elements (11) are equal.

9. Sensor according to at least one of Claims 1 to 8, **characterized in that** the transmitters (12) and receivers (13) are located opposite in each case.

10. Sensor according to at least one of Claims 1 to 9, **characterized in that** at least a part of the active elements (11) are arranged in a grid viewed in the detection direction (4).

11. Sensor according to at least one of Claims 1 to 10, **characterized in that** at least a part of the active elements (11) has an arrangement corresponding to a terminated Cantor set.

12. Sensor according to at least of one Claims 1 to 11, **characterized in that** the waves (14) are electromagnetic waves.

13. Sensor according to at least one of Claims 1 to 12, **characterized in that** the waves (14) are soundwaves.

14. Sensor according to at least one of Claims 1 to 13, **characterized in that** at least one of the active elements (11) is transmitter (12) and receiver (13) .

15. Sensor according to at least one of Claims 1 to 14, **characterized in that** the sensor (10) can detect the at least one edge (3) in the detection direction (4) and/or transversely thereto

## Revendications

1. Capteur permettant de détecter au moins un bord (3) d'au moins une bande de matière (1) se déplaçant dans un sens machine (2), le capteur (10) présentant des éléments actifs (11) qui sont disposés côte à côte dans au moins une direction de détection (4) s'étendant transversalement au sens machine (2) de ladite au moins une bande de matière (1), et les éléments actifs (11) étant formés par des émetteurs (12) et des récepteurs (13), les émetteurs (12) pouvant émettre des ondes (14) et les récepteurs (13) pouvant recevoir les ondes (14), et la bande de matière (1) étant prévue pour influencer les ondes (14) sur le trajet de rayonnement entre les émetteurs (12) et les récepteurs (13), un premier (21, 31) et un deuxième (22, 32) des éléments actifs (11) étant voisins dans la direction de détection (4), et présentant une première distance mutuelle (41) dans la direction de détection (4),
**caractérisé en ce que** le deuxième (22, 32) et un troisième (23, 33) des éléments actifs (11) sont voisins dans la direction de détection (4) et présentent une deuxième distance mutuelle (42) dans la direction de détection (4) qui correspond à au moins 1,2 fois la première distance (41), et le troisième (23, 33) et un quatrième (24, 34) des éléments actifs (11) sont disposés de façon adjacente dans la direction de détection (4), une troisième distance mutuelle entre le troisième (23, 33) et le quatrième (24, 34) des éléments actifs (11) dans la direction de détection (4) correspondant au plus à 1,1 fois la première distance (41).

2. Capteur selon la revendication 1, **caractérisé en ce que** le premier (21, 31) et le deuxième (22, 32) des éléments actifs (11) constituent un groupe (51), et le troisième (23, 33) et le quatrième (24, 34) des éléments actifs (11) constituent un groupe (52), les groupes (51, 52) présentant une quatrième distance mutuelle (44) qui est au moins égale à 2,2 fois la première distance (41).

3. Capteur selon la revendication 2, **caractérisé en ce que** des groupes (53, 54) d'un ordre supérieur parmi les groupes (51, 52) présentent une cinquième distance mutuelle (45) qui correspond à au moins 2,2 fois la distance des groupes (51, 52).

4. Capteur selon la revendication 3, **caractérisé en ce que** la revendication 4 est applicable itérativement **en ce que** des groupes (53, 54) sont réunis en groupes d'ordre supérieur qui présentent à leur tour une distance mutuelle qui correspond au moins à 2,2 fois la distance des groupes (53, 54) de l'ordre inférieur.

5. Capteur selon au moins l'une des revendications 1 à 4, **caractérisé en ce qu'**au moins l'un des éléments actifs (11) présente une largeur (16) qui correspond à au moins la moitié de la première distance (41).

6. Capteur selon au moins l'une des revendications 1 à 5, **caractérisé en ce que** les largeurs (16) des émetteurs (12) sont identiques.

7. Capteur selon au moins l'une des revendications 1 à 6, **caractérisé en ce que** les largeurs (16) des récepteurs (13) sont identiques.

8. Capteur selon au moins l'une des revendications 1 à 7, **caractérisé en ce que** les largeurs (16) des éléments actifs (11) sont identiques.

9. Capteur selon au moins l'une des revendications 1 à 8, **caractérisé en ce que** les émetteurs (12) et les récepteurs (13) se font face respectivement.

10. Capteur selon au moins l'une des revendications 1 à 9, **caractérisé en ce qu'**au moins une partie des éléments actifs (11), vue dans la direction de détection (4), est disposée sous forme de trame.

11. Capteur selon au moins l'une des revendications 1 à 10, **caractérisé en ce qu'**au moins une partie des éléments actifs (11) présente un agencement selon un ensemble de Cantor tronqué.

12. Capteur selon au moins l'une des revendications 1 à 11, **caractérisé en ce que** les ondes (14) sont des ondes électromagnétiques.

13. Capteur selon au moins l'une des revendications 1 à 12, **caractérisé en ce que** les ondes (14) sont des ondes sonores.

14. Capteur selon au moins l'une des revendications 1 à 13, **caractérisé en ce qu'**au moins l'un des éléments actifs (11) est un émetteur (12) et un récepteur (13).

15. Capteur selon au moins l'une des revendications 1 à 14, **caractérisé en ce que** le capteur (10) peut détecter ledit au moins un bord (3) dans la direction de détection (4) et/ou transversalement à celle-ci.
